(19) Europäisches Patentamt
European Patent Office
Office européen des brevets

(11) Veröffentlichungsnummer: **0 218 875**
**A2**

(12) **EUROPÄISCHE PATENTANMELDUNG**

(21) Anmeldenummer: 86112056.6

(22) Anmeldetag: 01.09.86

(51) Int.Cl.[4]: **C 08 L 83/04**
//(C08L83/04, 23:12)

(30) Priorität: 13.09.85 DE 3532685

(43) Veröffentlichungstag der Anmeldung:
22.04.87 Patentblatt 87/17

(84) Benannte Vertragsstaaten:
BE DE FR IT NL

(71) Anmelder: BAYER AG
Konzernverwaltung RP Patentabteilung
D-5090 Leverkusen 1 Bayerwerk(DE)

(72) Erfinder: Würminghausen, Thomas, Dr.
Christian-Hess-Strasse 65
D-5090 Leverkusen 1(DE)

(72) Erfinder: Sattlegger, Hans, Dr.
Auf dem Heidchen 9
D-5068 Odenthal(DE)

(72) Erfinder: Schmidt, Hermann
Schoppbüchel 38
D-5460 Linz/Rhein(DE)

(72) Erfinder: Wrobel, Dieter, Dr.
Jacob-Böhme-Strasse 11
D-5000 Köln 80(DE)

(54) **Härtbare Silicon-Kautschukmassen.**

(57) Die vorliegende Erfindung betrifft härtbare Siliconzusammensetzung erhältlich durch Vermischen von Polydiorganosiloxanen mit reaktiven Endgruppen bzw. gegebenenfalls oberflächenmodifizierten Füllstoffen, vernetzend wirkenden Silanen bzw. Silangemischen bzw. daraus herstellbaren Siloxanen und gegebenenfalls Katalysatoren. Zusätzlich werden hydrierte Oligomere von 2-Methylpropen mit einem Molgewicht von bis zu etwa 600 mitverwendet.

EP 0 218 875 A2

Croydon Printing Company Ltd

BAYER AKTIENGESELLSCHAFT 5090 Leverkusen, Bayerwerk
Konzernverwaltung RP
Patentabteilung Br/kü-c

# Härtbare Silicon-Kautschukmassen

Die Erfindung betrifft bei Raumtemperatur härtbare - im folgenden kurz als RTV-bezeichnete - Silicon-Kautschukmassen und solche, die bei Anwendung erhöhter Temperatur härten.

Derartige Silicone sind seit längerer Zeit bekannt (vgl. z.B. W. Noll, Chemie und Technologie der Silicone, Verlag Chemie GmbH, 1968, S. 391).

Diese Pasten vulkanisieren unter dem Einfluß der Feuchtigkeit der Luft oder nach Zumischung einer zweiten Komponente zu einem Elastomer. Entsprechend der Vielzahl von Anwendungen sind in der Literatur Formulierungen vorgeschlagen worden, die dem jeweiligen Einsatzgebiet optimal entsprechen sollen.

Die vorliegende Erfindung bezieht sich auch auf einkomponentige RTV-Formulierungen, die unter Beibehaltung der silicon-typischen Bewitterungsstabilität die Herstellung preisgünstigerer Pasten mit verbesserter Transparenz bzw.

guter Extrudierbarkeit aus einem Lagerbehälter erlaubt, sowie auf additionsvernetzende Silicon-Kautschukmassen.

Wenn es auf die Herstellung einkomponentiger RTV-Pasten mit besonders guter Lichtdurchlässigkeit ankommt, werden entsprechend dem derzeitigen Stand der Technik als Polymer Blockcopolymer aus Dimethyl- und Diphenylsiloxaneinheiten eingesetzt. Wenn es jedoch nicht auf eine "glasklare" Transparenz ankommt, sind derartige Formulierungen zu teuer, um im großem Umfang vermarktet zu werden. Es sind daher in der Vergangenheit Zusätze beschrieben worden, mit denen man eine für viele Anwendungszwecke ausreichend gute Transparenz erreicht. Außerdem haben diese Formulierungen den Vorteil, daß sie preiswertiger sind als solche, bei denen diese Zusätze fehlen.

Diese Zuätze haben jedoch alle irgendwelche Nachteile, z.B. sind sie nur bei relativ geringem Anteil mit Siliconpolymeren verträglich, verschlechtern die Haftung oder neigen zur Verfärbung unter Bewitterungsbedingungen oder schon unter Lagerungsbedingungen der nicht gehärteten Paste. Zu derartigen Zusätzen gehören z.B. die in DE-OS 1 286 246, 2 346 856, 2 457 816, 2 908 036, 3 221 655 und FR 2 405 984 beschriebenen Substanzen.

Die vorliegende Erfindung betrifft neue, in der Transparenz verbesserte Siliconformulierungen, erhältlich durch Vermischen von Polydiorganosiloxanen mit reaktiven Endgruppen, bzw. gegebenenfalls reaktiven Seitengruppen, verstärkenden Füllstoffen und gegebenenfalls Gemischen

reaktionsfähiger Silane der allgemeinen Formel $R_aSi$ $Y_{4-a}$ wobei R unabhängig voneinander für Alkyl, Haloalkyl, Aminoalkyl, Aryl oder Aralkyl und Y unabhängig voneinander für

$$-H,\ -OR,\ O-\underset{\underset{O}{\|}}{C}-R,\ -N-\underset{\underset{O}{\|}}{C}-R,\ -NRR,\ -ONRR,\ -ON{=}CCR-$$

Gruppen stehen mit $a = 0$ bis 3 und 4-a in Summe $> 2$ bzw. mit den aus diesen Silanen herstellbaren partiellen Hydrolyse- bzw. Kondensationsprodukten, hyrierten Oligomeren von 2-Methylpropen mit 2 bis etwa 10 Monomereinheiten und Katalysatoren und sonstige dem Stand der Technik entsprechende Zusatzstoffe wie Alterungsschutzmittel, biologisch wirksame Substanzen sowie gegebenenfalls $\alpha,\omega$-Triorgano-siloxy-polydiorgano-siloxane und andere Silane als Haftmittel.

Die Erfindung betrifft Formulierungen, die durch Vermischen von 100 Gew.-Teilen Polydiorganosiloxanen mit $\alpha$- und $\omega$-ständigen und gegebenenfalls seitenständigen reaktiven Gruppen der Viskosität von 0,1 bis 500 000 Pa.s bei 20° C, 8 bis 100 Gew.-Teilen verstärkend wirkender Füllstoffe, 1 bis 30 Gew.-Teilen reaktiver Silane bzw. Siloxane und 10 bis 100 Gew.-Teilen hydrierter Produkte einer Oligomerisation von 2-Methylpropen, bevorzugt aus 2 bis 6 Monomereinheiten, besonders bevorzugt mit 5 Monomereinheiten, gegebenenfalls Katalysatoren und weitere an sich

bekannten Füllstoffen wie α,ω-Trimethyl siloxypolydimethylsiloxanen der Viskosität 0,01 bis 10 Pa.s bei 20°C entstehen. Die 2-Methylpropen-Derivate sollen ein Molgewicht bis zu etwa 600 aufweisen, vorzugsweise zwischen 200 und 500.

Als Polydiorganosiloxane werden der leichten Zugänglichkeit wegen bevorzugt Polydimethylsiloxane mit endständigen Hydroxy- bzw. Vinylgruppen, die gegebenenfalls auch seitenständig sein können, wobei zumindest ein Teil der Methylgruppen durch längerkettige Alkylgruppen ersetzt werden können, eingesetzt. Ein gewisser Anteil an verzweigend wirkenden Organosiloxygruppen kann vorhanden sein.

Die Hydroxydimethylsiloxy-Endgruppen können durch hydrolytisch abspaltbare Endgruppen ersetzt sein, wie z.B. durch Triacetoxysiloxygruppen.

Die Viskosität der Polymere für RTV-Silicone liegt bevorzugt zwischen 5000 mPa.s, um eine befriedeigende Dehnbarkeit zu erreichen und 500 000 mPa.s, um eine gute Handhabung des sonst zu zähflüssigen Materials zu gewährleisten. Ein anderer Bestandteil der erfindungsgemäßen Pasten kann ein durch Trimethylsiloxygruppen endgestopptes Polydiorganosiloxan sein, dessen Organogruppen normalerweise Methylgruppen aber auch, zumindest zum Teil, Vinyl- oder Phenylgruppen sein können. Auch in diesem Polymer dürfen statt der Diorganosiloxybaugruppen Anteile an verzweigend wirkenden Gruppen vorhanden sein.

Als verstärkend wirkender Füllstoff wird feinteilige Kieselsäure, die gegebenenfalls oberflächenmodifiziert worden sein kann oder gegebenenfalls unter Verwendung von Modifizierungsmitteln wie z.B. Hexamethyldisilazan und Divinyltetramethyldisilazan während des Mischprozeses in Gegenwart von Wasser behandelt wird, eingesetzt.

Die Menge an Füllstoff richtet sich dabei nach dem Einsatzgebiet für das die entsprechende Formulierung vorgesehen ist. Der gleichzeitige Einsatz anderer Füllstoffe oder die Verwendung anderer verstärkender Füllstoffe ist dadurch nicht ausgeschlossen.

Vernetzend wirken in den erfindungsgemäßen Formulierungen Siloxane mit Si-H-Anteilen oder hydrolyselabile Siliziumverbindungen, bevorzugt solche, deren Spaltprodukte die Transparenz der Formulierung nicht nachteilig beeinflussen wie einige Oxime, Carbonsäuren, partiell veresterte mehrfach funktionelle Carbonsäuren, Alkohole, Amine, Amide oder Hydroxylamine und besonders bevorzugt Essigsäure und Butanonoxim.

Zur Beschleunigung oder Bewirkung der Vulkanisation können Metallkatalysatoren wie z.B. Platin- oder Zinnverbindungen mitverwendet werden. Gegebenenfalls kann ein die Härtung bei Raumtemperatur verzögernder Inhibitor mitverwendet werden. Der erfindungsgemäße Zusatz ist ein hydriertes Oligomer von 2-Methylpropen, das je nach Herstellungbedingungen aus nur zwei oder mehreren Monomereinheiten besteht und nach der Herstellung hydriert wird. Entsprechend den Herstellungsbedingungen besteht der Zusatz

nicht aus einem einheitlichen Produkt, sondern aus einem Gemisch von Verbindungen unterschiedlichen Oligomerisationsgrades mit Schwerpunkt bei einer gewissen Zahl von Monomereinheiten. Die Anwesenheit von anderen Alkenen bei der Oligo- bzw. Polymerisation ist entsprechend den Reinigungsbedingungen (z.B. Destillation) des Monomers möglich. Zur Herstellung dieser Produkte siehe z.B. Kunststoff-Handbuch, Band IV, Hrgb. R. Vieweg, A. Schley, A. Schley, A. Schwarz, Carl Hanser Verlag, München, 1969, DE-OS 1 194 398 und DE-OS 3 010 720. Der Zusatz wird in flüssiger Form mit den übrigen Bestandteilen der Formulierungen mit üblichen gegebenenfalls evakuierbaren Mischaggregaten verarbeitet.

Bei den folgenden Beispielen beziehen sich die Shore-A-Werte auf die Messung nach DIN 53 505, die Bruchdehnungs-, Zugfestigkeits- und Spannungswerte auf DIN 53 504, die Angaben über UV-Stabilität auf die Lagerung von Vulkanisaten unter einer 300 W UV-Lampe (Osram Ultra Vitalux). Die Verträglichkeit der Weichmacher wird visuell, taktil und mit einem Ausschwitztest beurteilt. Dabei wird eine ausgehärtete Probe (2 mm Schichtdicke, 11 mm Durchmesser) zwischen saugfähiges Papier gelegt, mit einem Gewicht belastet und nach 7 Tagen der Durchmesser des entstehenden Ölfleckes gemessen. Die Verträglichkeit des Weichmachers in dem Kautschuk bzw. Vulkanisat wird als gut beurteilt, wenn die o.a. Prüfungen ähnlich günstig sind wie im Vergleichsversuch. Die Viskositäten wurden bei 20° C gemessen.

Die Erfindung soll anhand der folgenden Beispiele erläutert werden.

Beispiel 1

61,5 g α,ω-Dihydroxypolydimethylsiloxan der Viskosität 50 000 mPa.s werden unter Feuchtigkeitsausschluß mit 12,1 g α,ω-Bis-trimethylsiloxypolydimethylsiloxan der Viskosität 100 mPa.s, 12,0 g hydriertem 2-Methylpropenpentamer, 4,0 g Ethyltriacetoxysilan, 0,9 g Dibutoxydiacetoxysilan, 9,5 g pyrogener Kieselsäure mit einer mittleren BET-Oberfläche von 130 $m^2$/g und 0,01 g Dibutylzinndiacetat vermischt.

Nach sieben Tagen vulkanisiert die Paste an der Luft zu einem Elastomer an dem folgende Werte gemessen werden:

| | |
|---|---|
| Shore A: | 20 |
| Spannungswert 100 %: | 0,31 MPa |
| Zugfestigkeit: | 1,57 MPa |
| Bruchdehnung: | 655 % |

Dieses Vulkanisat verändert sich nach 7-tägiger UV-Lagerung nicht. Die Verträglichkeit der Weichmacher ist gut.

Beispiel 2

Der Ansatz entsprechend Beispiel 1 wird wiederholt, jedoch werden anstelle von 12,0 g hydriertem 2-Methylpropenpentamer 24,1 g und kein α,ω-Bis-trimethylsiloxypolydimethylsiloxan eingesetzt.

Die sehr transparente Paste vulkanisiert nach sieben Tagen zu einem Elastomer mit den gemessenen Werten:

| | |
|---|---|
| Shore A: | 18 |
| Spannungswert 100 %: | 0,30 MPa |
| Zugfestigkeit: | 1,46 MPa |
| Bruchdehnung: | 639 % |

Die Verträglichkeit des Weichmachers mit der Siliconmasse ist gut. Nach 7tägiger Lagerung unter UV-Einwirkung wird keine Farbveränderung beobachtet.

Beispiel 3 (Vergleich zu Versuch 1 und 2)

Das Beispiel 2 wird wiederholt mit der Abänderung, daß anstelle des hydrierten Pentamers 24,1 g $\alpha,\omega$-Bis-trimethylsiloxypolydimethylsiloxan der Viskosität 1.000 mPa.s eingesetzt werden.

Nach sieben Tagen werden an einem Vulkanisat dieser Pasta die Werte gemessen:

| | |
|---|---|
| Shore A: | 20 |
| Spannungswert 100 %: | 0,31 MPa |
| Zugfestigkeit: | 1,32 MPa |
| Bruchdehnung: | 600 % |

Die Transparenz gegenüber Beispiel 2 ist deutlich schlechter.

Beispiel 4

55,6 g α,ω-Dihydroxypolydimethylsiloxan der Viskosität 50 000 mPa.s werden mit 30,0 g hydriertem 2-Methylpropenpentamer, 4,0 g Ethyltriacetoxysilan, 0,9 g Dibutoxydiacetoxysilan, 9,5 g pyrogener Kieselsäure mit der mittleren Oberfläche von 150 $m^2/g$ nach BET und 0,01 g Dibutylzinndiacetat unter Feuchtigkeitsausschluß vermischt. Nach sieben Tagen ist die standfeste Paste zu einem ausgezeichnet transparenten Elastomer vulkanisiert mit den mechanischen Eigenschaften:

| | |
|---|---|
| Shore A: | 21 |
| Spannungswert 100 %: | 0,23 MPa |
| Zugfestigkeit: | 1,31 MPa |
| Bruchdehnung: | 734 % |

Die UV-Lagerung bewirkt keine Veränderung des Vulkanisats, die Verträglichkeit des Weichmachers ist gut.

Beispiel 5

55,9 g α,ω-Dihydroxypolydimethylsiloxan der Viskosität 50 000 mPa.s werden mit 30,0 g hydriertem 2-Methylpropenpentamer, 6,0 g Methyl-tributanonoximsilan, 8,1 g pyrogener Kieselsäure mit einer mittleren BET-Oberfläche von 110 $m^2/g$, 0,7 g γ-Aminopropyltriethoxysilan und 0,3 g Dibutylzinndilaurat unter Luftausschluß vermischt und anschließend 7 Tage lang an der Luft vulkanisiert. An dem Elastomer werden die mechanischen Werte gemessen:

| | |
|---|---|
| Shore A: | 21 |
| Spannungswert 100 %: | 0,33 MPa |
| Zugfestigkeit: | 1,08 MPa |
| Bruchdehnung: | 450 % |

Die UV-Lagerung bewirkt keine Veränderung des Vulkanisats, die Verträglichkeit des Weichmachers ist gut.

Beispiel 6

55,6 g α,ω-Dihydroxypolydimethylsiloxan der Viskosität 50 000 mPa.s werden mit 30,0 g hydriertem 2-Methylpropentetramer, 4,0 g Ethyltriacetoxysilan, 0,9 g Dibutoxydiacetoxysilan, 9,5 g pogener Kieselsäure mit der mittleren Oberfläche von 150 $m^2/g$ nach BET und 0,01 g Dibutylzinndiacetat unter Feuchtigkeitsausschluß vermischt. Nach 7 Tagen Aushärtung entsteht ein leicht eingetrübter Gummi (weniger transparent als der Gummi nach Beispiel 4) mit folgenden mechanischen Daten:

| | |
|---|---|
| Shore A: | 26 |
| Modul 100 %: | 0,48 MPa |
| Zugfestigkeit: | 3,51 MPa |
| Bruchdehnung: | 1020 % |

Beispiel 7

55,6 g α,ω-Dihydroxypolydimethylsiloxan der Viskosität 50 000 mPa.s werden mit 30,0 g hydriertem 2-Methylpropentrimer, 4,0 g Ethyltriacetoxysilan, 0,9 g Dibutoxydiacetoxysilan, 9,5 g pyrogener Kieselsäure mit der mittleren Oberfläche von 150 $m^2$/g nach BET und 0,01 g Dibutylzinndiacetat unter Feuchtigkeitsausschluß vermischt. Nach der Aushärtung entsteht ein transparenter Gummi, welcher nach 3 Tagen UV-Belichtung leicht eintrübt.

Mechanische Daten

| | |
|---|---|
| Shore A: | 30 |
| Modul 100 %: | 0,53 MPa |
| Zugfestigkeit: | 3,79 MPa |
| Bruchdehnung: | 910 % |

Beispiel 8

55,6 g α,ω-Dihydroxypolydimethylsiloxan der Viskosität 50 000 mPa.s werden mit 30,0 g hydriertem 2-Methylpropendimer, 4,0 g Ethyltriacetoxysilan, 0,9 g Dibutoxydiacetoxysilan, 9,5 g pyrogener Kieselsäure mit der mittleren Oberfläche von 150 $m^2$/g nach BET und 0,01 g Dibutylzinndiacetat unter Feuchtigkeitsausschluß vermischt. Der nach der Aushärtung bei Raumtemperatur erhaltene Gummi ist transparent und hat eine trockene Oberfläche.

Nach einer 3-tägigen UV-Belichtung tritt keine Farbveränderung ein.

Es wurden folgende mechanische Werte ermittelt:

| | |
|---|---|
| Shore A: | 40 |
| Modul 100 %: | 0,81 MPa |
| Zugfestigkeit: | 3,49 MPa |
| Bruchdehnung: | 580 % |

Beispiel 9 (Vergleich zu Beispiel 4, 6, 7 und 8)

55,6 g α,ω-Dihydroxypolydimethylsiloxan der Viskosität 50 000 mPa.s werden mit 30,0 g unhydriertem 2-Methylpropenpentamer, 4,0 g Ethyltriacetoxysilan, 0,9 g Dibutoxidiacetoxysilan, 9,5 g pyrogener Kieselsäure mit der mittleren Oberfläche von 150 $m^2$/g nach BET und 0,01 g Dibutylzinndiacetat unter Feuchtigkeitsausschluß vermischt. Nach sieben Tagen Aushärtung der Paste bei Raumtemperatur zeigt der Gummi eine leicht klebrige Oberfläche.

Nach 3 Tagen UV-Belichtung trat eine starke Vergilbung des Gummis sowie ein starkes Ausschwitzen an der Oberfläche auf. Folgende mechanische Werte wurden gemessen:

| | |
|---|---|
| Shore A: | 26 |
| Modul 100 %: | 0,34 MPa |
| Zugfestigkeit: | 1,79 MPa |
| Bruchdehnung: | 750 % |

Beispiel 10

In einem Kneter werden 140 Teile vinylendgestopptes Polydimethylsiloxan mit einer Viskosität von 65 000 mPa.s

mit 10 Teilen Hexamethyldisilazan und 6 Teilen Wasser anschließend mit 46 Teilen pyrogen hergestellter Kieselsäure mit einer spezifischen Oberfläche von 300 $m^2/g$ nach BET zu einer homogenen Masse verknetet (Einarbeitung der Füllstoffe gemäß DE-OS 2 535 334). Die Mischung wird zunächst auf 130°C erwärmt und 1,5 Stunden im geschlossenen Kneter gerührt und danach bei 160°C unter Vakuum von Wasser und überschüssigem Hexamethyldisilazan befreit. Nach dem Erkalten des Compounds wird die Mischung mit 60 Teilen hydriertem 2-Methylpropenpentamer, 2,2 Teilen trimethylsiloxyendgestopptem Polydimethylsiloxan mit 30 Mol-% SiH-Gruppen und einer Viskosität von 100 mPa.s bei 20°C und 0,01 Teilen einer Komplexverbindung aus Platin und Tetramethyltetravinylcyclotetrasiloxan vermengt und 10 Minuten bei 175°C ausgehärtet. Die Verträglichkeit des Weichmachers ist gut.

Beispiel 11

Beispiel 10 wurde mit trimethylsiloxyendgestopptem Polydimethylsiloxan mit einer Viskosität von 1000 mPa.s statt hydriertem 2-Methylpropenpentamer wiederholt.

Physikalische Eigenschaften der Vulkanisate

| | Beispiel 10 | Beispiel 11 |
|---|---|---|
| Shore A | 9 | 10 |
| Zugfestigkeit, MPa | 3,1 | 3,3 |
| Dehnung % | 980 | 1010 |

Beispiel 12

Beispiel 10 wurde außerdem mit der Abänderung wiederholt, daß anstelle von hydriertem nicht hydriertes 2-Methylpropenpentamer eingesetzt wurde. Die Probe vulkanisierte nicht zu einem Elastomer, sondern vergelte nur.

Patentansprüche

1. Härtbare Siliconzusammensetzung erhältlich durch Vermischen von Polydiorganosiloxanen mit reaktiven Endgruppen bzw. gegebenenfalls reaktiven Seitengruppen, verstärkenden gegebenenfalls oberflächenmodifizierten Füllstoffen, vernetzend wirkenden Silanen bzw. Silangemischen $R_aSi\ Y_{4-a}$ mit R unabhängig voneinander für Alkyl, Haloalkyl, Aminoalkyl, Aryl oder Aralkyl und Y unabhängig voneinander für -H, -OR-OCOR, -N(R)-C(R)=O, -NRR, -ONRR, -ON=CRR, -O-C(R)=CHR stehen mit a = 0 bis 3 und 4-a in Summe größer als zwei bzw. daraus herstellbaren Siloxanen und gegebenenfalls Katalysatoren, dadurch gekennzeichnet, daß hydrierte Oligomere von 2-Methylpropen mit einem Molgewicht bis zu etwa 600 mitverwendet werden.

2. Härtbare Siliconzusammensetzung nach Anspruch 1 erhältlich durch Vermischen von 100 Gew.-Teilen Polydimethylsiloxan der Viskosität von 0,1 bis 500 000 Pa.s mit reaktiven Endgruppen bzw. gegebenenfalls reaktiven Seitengruppen mit

0 bis 100 Gew.-Teilen α,ω-Trimethylsiloxypolydimethylsiloxan,
8 bis 100 Gew.-Teilen verstärkenden Füllstoffen,

1 bis 30 Gew.-Teilen vernetzend wirkenden Silanen bzw. Siloxanen und gegebenenfalls

0,003 bis 1 Gew.-Teilen Härtungs-Katalysator,

dadurch gekennzeichnet, daß 10 bis 100 Gew.-Teilen hydrierter 2-Methylpropenoligomere mitverwendet werden.

3. Zusammensetzung nach Anspruch 1 oder 2, dadurch gekennzeichnet, daß als hydrierte 2-Methylpropenoligomere Dimere, Trimere, Tetramere, Pentamere und/oder Hexamere verwendet werden.

4. Zusammensetzung nach Anspruch 1 oder 2, dadurch gekennzeichnet, daß als Polydimethylsiloxan α,ω-Divinylpolydimethylsiloxan, mit gegebenenfalls seitenständigen Vinylgruppen und als vernetzend wirkende Silane bzw. Siloxane wasserstoffhaltige Siloxane verwendet werden und gegebenenfalls ein die Härtung bei Raumtempertur verzögernder Inhibitor.

5. Zusammensetzung nach einem der Ansprüche 1 bis 4, dadurch gekennzeichnet, daß als Polydimethylsiloxan α,ω-Dihdyroxypolydimethylsiloxan und als vernetzend wirkende Silane Acyloxysilane verwendet werden.

6. Zusammensetzung nach einem der Ansprüche 1 bis 4, dadurch gekennzeichnet, daß als vernetzend wirkende Silane Ketoximsilane verwendet werden.